# EUROPEAN PATENT APPLICATION

(11) **EP 1 674 304 A2**
(43) Date of publication of application: **28.06.2006**
(21) Application number: 05077660.8
(22) Date of filing: 23.11.2005
(51) Int. Cl.: B60C 25/00

(54) **Tool for inserting/extracting an elastic ring in/from a tyre**

(30) Priority: 22.12.2004 IT RE20040017 U
(71) Applicant: CORGHI S.p.A., I-42015 Correggio (Reggio Emilia) (IT)
(72) Inventor: Corghi, Remo, 42015 Correggio (Reggio Emilia) (IT)
(74) Representative: Corradini, Corrado

(57) **Abstract**

A tool (1) for the insertion of an elastic ring inside a tyre and for the extraction of the same, comprising a jack (2) which causes the mutual separation and approaching of two opposing shoes (4, 5) adapted to deform the elastic ring, and command means (12, 13) of the jack (2); said jack (2) being integrally associated with a handle (10) adapted to permit the manual movement of the tool (1) itself.

## Description

The present finding refers, in general, to a tool which serves to facilitate the operations of insertion of an elastic ring within a tyre, and of the extraction of the same.

Similar operations are normally carried out by tyre repairers during the reparation or substitution of the tyres known commercially as "PAX System" and the like, which as known are capable of sustaining the weight of the vehicle even if completely deflated, thanks to an elastic, hard rubber ring positioned between the tyre itself and the wheel rim.

Such elastic ring is inserted inside the tyre before this is mounted on the wheel rim, and since it has an external diameter superior to the diameter of the tyre opening (this last being defined by the edge of the bead), its mounting compels tyre repairers to carry out arduous and tiring operations.

To simplify these operations, there are known devices comprising a jack intended to be positioned inside the elastic ring, which is adapted to elastically deform such ring, slightly extending it in the direction of a diameter, thus modifying its form from cylindrical to elliptical.

With the aid of these devices, the elastic ring is positioned with its own axis orthogonal to that of the tyre, and deformed a first time so that it may be inserted within the opening of the tyre itself; in such position, the ring is first released, regaining its circular form and, subsequently, deformed a second time in the direction orthogonal to the preceding, so that it may be finally rotated and brought to be coaxial with the tyre.

Nevertheless, since such devices are generally mounted on fixed or scarcely manoeuvrable structures, during the aforementioned operations the elastic ring is maintained constantly stopped and the tyre repairer is thus compelled to raise, move and tilt the tyres in order to be able to insert, or alternatively extract said elastic ring; therefore, the tyres being normally heavy and unwieldy, such operations likewise are slow and tiring.

Object of the present finding is to provide a tool for inserting and extracting the elastic ring to/from a tyre which is manoeuvrable, and which permits said operations to be carried out while maintaining the tyre stopped in a single position.

Such object is obtained by a tool comprising a jack which, operated by appropriate command means, causes the mutual separation and approaching of two opposing shoes adapted to push on the inner surface of the elastic ring, deforming it along a diameter; said jack being integrally associated with a handle which permits the manual movement of the tool itself.

Thanks to this solution, the tool results substantially portable, and the tyre repairer may easily transport it where he/she considers it more convenient to carry out the operations of insertion and extraction of the elastic ring, without having to move the tyre.

Furthermore, since during the deformation step of the elastic ring the tool is integrally associated with it, the handle also advantageously permits the correct guiding and positioning of the elastic ring with respect to the tyre with great ease, and without the need to handle the tyre itself.

According to a preferred embodiment of the finding, moreover, the command means of the jack are integrally associated with the jack itself and, preferably, fastened at the handle, so that the tool may be conveniently operated by the tyre repairer without his/her having to lose his/her grip on the tool.

Further characteristics and advantages of the invention shall be evident from the following description provided as a non-limiting example, with the aid of the figures illustrated in the attached tables, in which:
- Figure 1 is a perspective view of a tool in accordance with the finding;
- Figure 2 is the section of trace II-II indicated in fig.1;
- Figures 3 to 6 show as many steps of a preferred method for inserting and extracting the elastic ring in a "PAX" or similar tyre, with the aid of a tool according to the finding.

From the mentioned figures, there is a tool 1 for the insertion of an elastic ring inside a tyre, and for the extraction of the same.

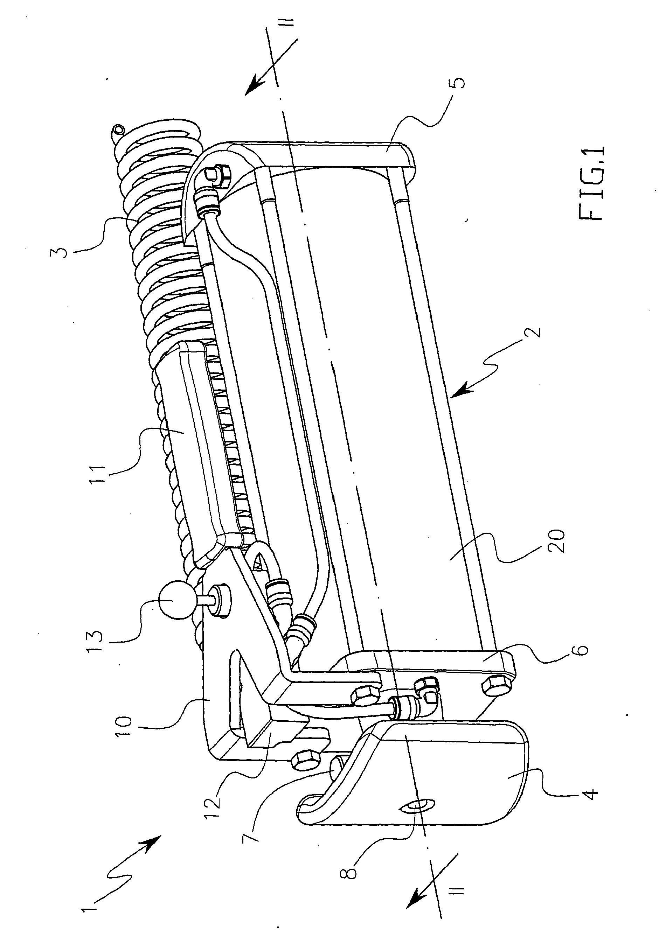

As may be seen in fig.1, the tool 1 comprises a tyre jack 2 which is operated by a common compressor (not shown) to which it is connected through an extendible hose 3, and which is adapted to cause the mutual approaching and separation of two opposing shoes, respectively front 4 and back 5, adapted to act on the inner surface of the elastic ring, deforming it in the direction of a diameter.

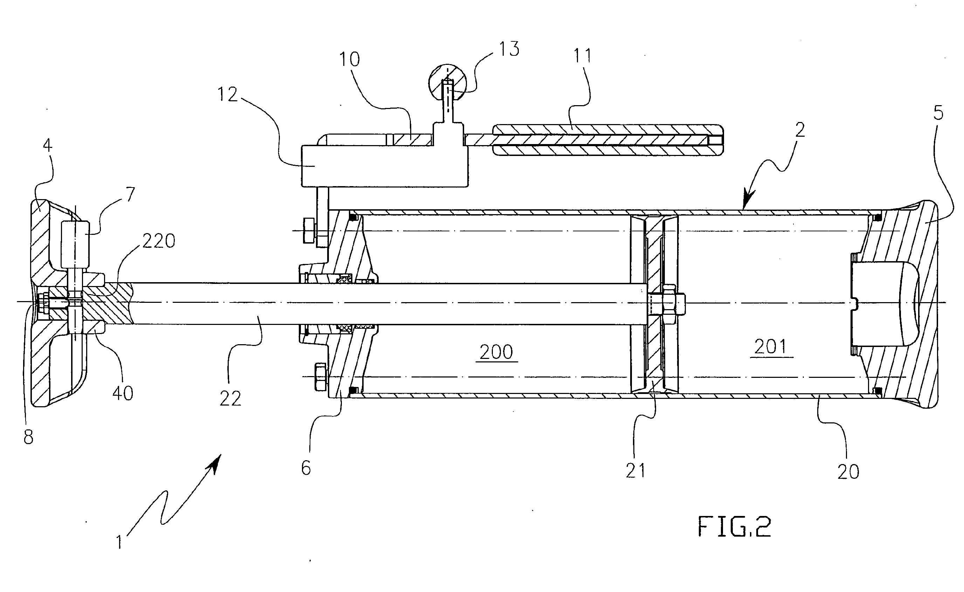

The tyre jack 2 (see fig.2) is composed of a cylinder 20 and a piston 21 sliding inside, which subdivides the internal volume of the cylinder 20 into two distinct chambers, 200 and 201, both connected with the compressed air circuit through the valve 12, and a rod 22 having a first end fastened to the piston 21, and a second end which extends outside the cylinder 20.

Said cylinder 20 is closed in the back by the back shoe 5 which is fastened with the interposition of appropriate sealing means, and closed in the front by a cap 6, it too fastened with interposed sealing means, which is provided with a central hole adapted to permit the passage and sliding of the rod 22.

The front shoe 4 is fastened to the free end of the rod 22, so that the sliding of the piston, pushed by the air under pressure, causes the approaching or separation with respect to the back shoe 5.

In particular, the rod 22 comprises a shank 220 adapted to be axially housed inside a liner 40 of the shoe 4, to which it is dismountably fastened by a pin 7 which is axially engaged in two transverse holes, mating respectively with the liner 40 and the shank 220; said pin 7 being in turn locked by a screw 8 which is screwed inside a hole placed at the head of the shank 220, which extends along the axis of the rod 22 and leads into the transverse hole of the shank 220 itself. In this manner the mounting and dismounting of the front shoe 4 is very simple and faster, in order to provide a possible substitution or to interpose between this and the rod 22 a rigid shaft which, in the form of an extension, makes the tool 1 adaptable to any elastic ring dimension.

In detail, as may be seen in fig.1, the front 4 and back 5 shoes have a curved outer profile which permits the support of the deformation of the elastic ring without damaging it, and provides an extended contact area for the inner surface of the same, so that the tool/ring coupling is stable and secure.

As illustrated in both of the attached figures, the tyre jack 2 is associated with a bracket 10 which is fastened by means of screws to the cap 6 of the cylinder 20, and which as a handle provides a handgrip 11, thanks to which the tyre repairer may transport and handle the tool 1 with ease.

The bracket 10 is further associated with tyre jack 2 command means, which comprise: a five-way valve 12 with three positions which, through appropriate connection tubes, deviates the flow of compressed air coming from the hose 3 toward the chambers 200 and 201 of the cylinder 20; and a lever 13 which, manually operated by the tyre repairer, is adapted to control the valve 12 so to direct the compressed air towards one chamber or the other, depending on whether it is desired to cause the exit or entrance of the rod 22 with respect to the cylinder 20.

In particular, the valve 12 is fastened to the bracket 10, so that the lever 13 is placed at the handgrip 11, permitting the tyre repairer to operate it without losing the grip of the tool 1 and with the same hand.

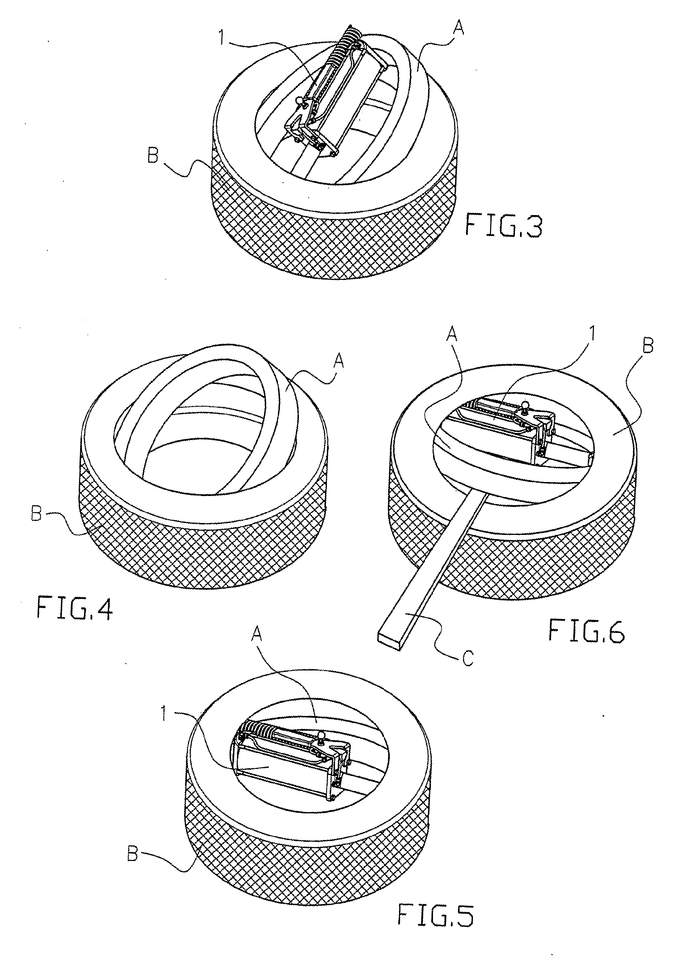

The tool 1, as thus described, is advantageously employed in the context of the following procedure which, described with the aid of the figs.3-5, permits the insertion of an elastic ring A in a tyre B of "PAX" or similar type, in a simple and rapid manner.

First, the tyre B is placed on the ground, or on any support considered convenient for use, with the only attention being to turn upward, or toward the tyre repairer, the side which has the greater opening area. The "PAX" or similar tyres are indeed not symmetrical, but have one of the two beads arranged with a greater circumference with respect to the other, and consequently is adapted to define a wider opening area.

After having positioned the tyre B, the elastic ring A is lubricated along its entire outer surface with an appropriate grease to facilitate its insertion; then, the tool 1 is arranged inside, with the rod 22 retracted in the cylinder 20.

At this point, the tyre jack 2 is operated so that the rod 22 slides toward the outside of the cylinder 20 and the shoes 4 and 5 push against the inner surface of the elastic ring A, deforming it in the direction of a diameter and causing it to assume an elliptical form.

In this manner, the tool 1 and the elastic ring are also integral with each other, advantageously permitting the tyre repairer to appropriately handle and direct the elastic ring by gripping the bracket 10 of the tool 1.

With reference to fig.3, the elastic ring A is then tilted and inserted in the tyre opening so that at least one of its first portions is contained within the carcass of the tyre B, comprised between the sidewalls of the same. After ensuring that said first portion is greater than half of the elastic ring A, the rod 22 is brought back into retracted position, thus the ring A regains its circular form, remaining partially contained within the tyre B (see fig.4). At this point, the tool 1 is reinserted within the elastic ring A, positioning it along the diameter orthogonal to the preceding diameter, and then the ring A is deformed until the portion outside the tyre B also crosses the opening area (see fig.5). The elastic ring is thus inserted, and the tool 1 may be removed.

To extract the elastic ring A, the procedure is substantially the reverse of that previously said, with the additional single step shown in fig.6.

By means of the tool 1, the elastic ring A placed within the tyre B is deformed along a first diameter until it obtains a slight deformation of the tread (see fig.5); then, the ring is rotated around its deformed diameter and partially extracted from the opening of the tyre B, in manual manner with the assistance of a lever C (see fig.6). At this point, maintaining the ring A locked in the position reached by means of the abovesaid lever C, the tool 1 is disengaged (see fig.4); then (see fig.3), such tool 1 is positioned along a diameter orthogonal to the preceding diameter and it once again deforms the elastic ring A, permitting the complete exit from the opening of the tyre B.

Obviously, with the object of satisfying contingent and specific needs, numerous modifications and variants may be brought to the described tool 1, without leaving the context of protection of the finding as claimed below.

## Claims

1. Tool (1) for the insertion of an elastic ring within a tyre and for the extraction of the same, comprising a jack (2) which causes the mutual separation and approaching of two opposing shoes (4, 5) adapted to deform the elastic ring, and command means (12, 13) of the jack (2), **characterised in that** said jack is integrally associated with a handle (10) adapted to permit the manual movement of the tool (1) itself.

2. Tool (1) according to claim 1, **characterised in that** the command means (12, 13) are integrally associated with the jack (2).

3. Tool (1) according to claim 1, **characterised in that** the handle comprises a bracket (10), to which a handgrip (11) is associated.

4. Tool (1) according to claim 1, **characterised in that** the jack (2) comprises a cylinder (20) inside which there slides a piston (21) integral with one (4) of the shoes adapted to deform the elastic ring, the other (5) being fastened to the cylinder (20) itself.

5. Tool (1) according to claim 4, **characterised in that** the piston comprises a rod (22) projecting from the cylinder (20), whose outer end is coupled in dismountable manner to said shoe (4).

6. Tool (1) according to claim 5, **characterised in that** the rod (22) is provided with a shank (220) adapted to be axially engaged within a corresponding liner (40) of the shoe (4), where it is fastened by locking means (7).

7. Tool (1) according to claim 5, **characterised in that** the shoe (4) is coupled to the rod (22) by means of the interposition of an extension adapted to increase the maximum distance obtainable between said shoe (4) and the opposing shoe (5).

8. Tool (1) according to claim 6, **characterised in that** the locking means comprise a pin (7) adapted to be transversely engaged within two transverse holes, mutually mating respectively with the shank (220) and the liner (40).

9. Tool (1) according to claim 4, **characterised in that** the command means of the jack (2) comprise a valve (12) adapted to deviate a flow of compressed air, coming from compressor means, toward the two chambers (200, 201) in which the piston subdivides the cylinder (20), and a command means (13) adapted to regulate the valve (12) so that said flow is directed into one chamber or the other depending on the sliding direction which it is desired to impose on the piston.

10. Tool (1) according to claim 9, **characterised in that** the command means is a hand-operation lever (13) projecting from the valve (12) in turn fastened to the handle (10).

11. Tool (1) according to claim 1, **characterised in that** the shoes (4, 5) have curved outer profiles, so to provide a wide contact area with the elastic ring, supporting the deformation.
